# EUROPEAN PATENT SPECIFICATION

(11) **EP 1 861 342 B1**
(45) Date of publication and mention of the grant of the patent: **22.01.2014**
(21) Application number: 06725856.6
(22) Date of filing: 23.03.2006
(51) Int. Cl.: C05G 5/00

(54) **PARTICULATE FERTILIZER PRODUCT, METHOD FOR ITS PREPARATION AND USE**
TEILCHENFÖRMIGES DÜNGEMITTEL, VERFAHREN ZU SEINER HERSTELLUNG UND SEINE VERWENDUNG
PRODUIT DE FERTILISANT PARTICULAIRE ET SON PROCEDE DE PREPARATION ET D'UTILISATION

(30) Priority: 24.03.2005 FI 20050322
(43) Date of publication of application: 05.12.2007
(73) Proprietor: Kemira GrowHow Oyj, 00181 Helsinki (FI); Neste Oil Oyj, 02150 Espoo (FI)
(72) Inventor: HERO, Heikki, FI-02200 Espoo (FI); URHONEN, Markku, FI-33900 Tampere (FI); NISKALA, Jorma, FI-02770 Espoo (FI)
(74) Representative: Berggren Oy Ab
(86) International application number: PCT/FI2006/000095
(87) International publication number: WO 2006/100341

(56) References cited:
- EP-A- 0 221 225
- EP-A1- 0 320 987
- WO-A-00/76649
- WO-A-01/38263
- WO-A-02/04579
- WO-A-96/00199
- WO-A-97/19030
- WO-A-99/63817
- FR-A1- 2 088 387
- US-A- 2 966 506
- US-A- 4 510 081

## Description

The invention relates to a product of coated fertilizer particles, a method for producing a product of coated fertilizer particles, and to the use of the product.

For prevention of caking and dusting, or delay of wetting, it is generally know to treat granulated fertilizer with oily product that may contain wax, polymers, fatty amines, or other surface active agents in addition to said oil. Coating may for instance be carried out by spraying the coating agent at 80 °C through nozzles on the granular fertilizer in a rotating drum, the temperature of the granular fertilizer ranging between 30 and 50 °C. Finally, the fertilizer is treated with a powdery talc or another finely divided material.

A suspension of a coating agent consisting of inorganic particles and liquid organic phase is known from WO 0076649 where said inorganic particles have been subjected to delaminating grinding in an organic liquid phase. Said inorganic particles may be talc, kaolin, or mica, whereas said organic phase may be mineral oil, or wax. The minerals mentioned in said publication are undispersible in oil, and accordingly, a separate grinding step was necessary for the use thereof.

US 6,558,445 discloses a method for coating fertilizers wherein solid inorganic substance improving the flowability thereof, for instance talc, is first applied by mixing on the fertilizer granules, followed by the addition of a hydrophobic liquid substance, for instance wax or paraffin, on the surface of the fertilizer thus coated with said inorganic substance. Said inorganic substances mentioned in the publication were used to improve the flowability of the fertilizer, and moreover, unless treated, said substances are not able to retain said hydrophobic liquid substance on the surface of the fertilizer.

Fertilizers contain inorganic salts, and further, the surface thereof may be dusty, or dust may be generated during storage and shipping. When such fertilizers are applied manually, the ingredients thereof, or fertilizer dust may cause dehydration of hands. While above coating solutions tend to improve the physical properties of the fertilizer, no solution to the problem of the dehydrating action of fertilizers on hands has so far been found.

While searching for a solution to the problem of the dehydration of hands when handling fertilizers, it was found that mixing of a gelling agent to the oily liquid tested for the coating of fertilizer particle followed by applying the obtained mixture on fertilizer particles provided a product that helped to eliminate problems of said techique while maintaining other properties. The product of the invention is characterized in that said coating comprises a gel obtained from said oily liquid, and a gelling agent.

The term gel means in this context not only a conventional gel made up of a solid substance and a liquid, but also a gel containing liquid that is solidified at room temperature. The latter is typically produced by performing the gelling at elevated temperature and by cooling, thus solidifying the liquid portion.

The coating of the product of the invention retains oily liquids, thus preventing or delaying the absorption thereof into the fertilizer particles. Once coated fertilizer particles are contacted with skin, part of the oily liquid on the surface of the fertilizer particles will stick to hands. The gelled oily liquid being fatty, handling of the fertilizer particles of the invention will not result in dehydration of hands like handling of ordinary fertilizer particles, but in an analogous manner, the coating of the fertilizer particles of the invention rather acts as a conditioning cream favourable for hands. The oily liquid may be selected from components harmless to skin. In addition to the improved handling properties of the product, the invention results in the improvement of the physical properties thereof, that is, the invention reduces dust formation, caking, and absorption of moisture, and moreover, reduces deterioration of the structure of the fertilizer particles since the oily liquid of the coating is retained on the fertilizer particle without being significantly absorbed into the particle.

The product of the invention composed of coated fertilizer particles comprises from 95 to 99.95 % by weight, preferably from 98.5 to 99.5 % by weight of fertilizer particles, and from 5 to 0.05 % by weight, preferably from 1.5 to 0.5 % by weight of the coating, said coating comprising a mixture consisting of an oily liquid in an amount ranging from 70 to 99.5 % by weight, preferably from 87 to 97 % by weight, and a gelling agent in an amount ranging from 30 to 0.5 % by weight, preferably 13 to 3 % by weight.

According to the invention, fertilizer particles to be coated may be made from a dust generating, hygroscopic and/or caking substance having sizes from 0.3 to 6 mm, preferably from 0.5 to 5 mm, even more preferably from 0.5 to 4 mm. Components of the fertilizer particles include e.g. nitrogen, phosphorus or potassium, or mixtures thereof. Moreover, the fertilizer particles may contain additional nutrients such as magnesium, potassium, sodium, or sulphur, and mixtures thereof. The fertilizer particles may also contain trace elements such as boron, cobalt, copper, iron, manganese, molybdenium or zinc, or mixtures thereof. According to an embodiment, said fertilizer particles may contain only additional nutrients such as calcium, for instance lime, or said particles may contain only trace elements, or mixtures thereof. Preferable sizes of the fertilizer particles may vary according to the granulation process, being typically from 3 to 4 mm for particles prepared with wet granulation process, and typically from 1 to 3 mm for particles prepared with dry granulation, or compaction process. The invention is particularly suitable for particles produced by compaction since such particles may comprise fracture planes and sharp edges that will easily break and produce dust during handling. In addition, the dense structure produced by compaction may slightly erupt during storage or due to the moisture absorbed from the atmosphere, thus giving rise to cracks and capillaries, causing a conventional coating to be absorbed into recesses and capillaries thus formed on the surface of the structure.

The coating of the coated fertilizer particle product of the invention comprises an oily liquid and a gelling agent to be mixed with said oily liquid. Said oily liquid contains from 50 to 100 %, preferably from 70 to 100 % by weight of oil, said oil being in liquid form at least during gelling but eventually solidifying at room temperature, and further, said liquid typically contains oil that may be a synthetic hydrocarbon, hydrocarbon based on mineral oils, a fossile oil, a derivative, or a mixture thereof. Said hydrocarbon is a linear, branched or cyclic alkane or a mixture thereof, having a viscosity preferably ranging between 2.7 and 15 mm²/s, as measured at 100 °C with the method according to ASTM D 445, and/or having a solidification point preferably ranging between 25 and 40 °C, as measured with the method according to ASTM D 97. The fossile oil is preferably a triglyceride (vegetable oil), another modified fatty acid ester, natural wax or a mixture thereof having a viscosity preferably ranging between 6 and 9 mm²/s (ASTM D 445) and/or a solidification point preferably ranging between 25 and 40 °C (ASTM D 97).

The purpose of the gelling agent to be mixed with the oily liquid is to obtain a gelled organic phase, and moreover, said gelling agent may be selected from a group consisting of agents for gelling oils or oily liquids such as organophilic clay, clay that may be organophilized, and surface active agents and/or mixtures thereof, preferably organophilic clays. Clay material of the organophilic clay may for instance be a clay substantially of the smectite type, e.g. clays of the bentonite or hectorite or palygorscite, attapulgite or sepiolite type that already are or will be organophilized, or a mixture thereof, preferably an organophilic sepiolite. Organophilizing refers to a chemical treatment modifying clays to become organophilic as known in the art, resulting in clays dispersible in oil. Gelling clay materials of the invention are characterized in that they have a characteristic three-dimensional structure, that is a structure with cavities or pores able to retain or adsorb oily fluids. For instance, sepiolite has a microfibrous character with channels. Said channels are formed from united pores of different shapes and sizes, network structures.

The process of the invention is characterized in that an oily liquid and a gelling agent are fed as a mixture on particle surface, said mixture thus forming a gel. The coating is produced by mixing from 0.5 to 30 %, preferably from 3 to 13 % by weight of the gelling agent in the oily liquid. For the addition of the gelling agent, the oily liquid is heated to a temperature ranging between 50 and 100 °C, preferably between 65 and 85 °C, followed by the addition of the gelling agent to said oily liquid by mixing.

The consistence of the coating it produced by gelling the oily liquid preferably allows for spraying, atomizing or pouring on fertilizer particles at 55 to 95 °C, preferably at 65 to 85 °C. During coating, the temperature of the particles may vary between -20 and +60 °C, preferably 0 and 40 °C. The coating of the invention is characterized in that it solidifies on the particle surface at least partly thus forming a coating conditioning for hands and inproving physical properties of the product. Coating of the particles is carried out by feeding the coating at 55 to 95 °C on the particle surface in equipment suitable for the process, for instance in a coating drum. The coating process may be operated continuously or using batches. Coating is fed on particle surfaces in an amount ranging from 0.05 to 5 %, preferably 0.5 to 1.5 % by weight, based on the weight of the coated particulate fertilizer product.

According to an embodiment of the invention, the oily liquid may be gelled using an oily liquid containing clay organophilized by means of a cationic surface active agent, for instance a quarternary ammonium compound such as a fatty alkyl benzyl dimethyl ammonium chloride.

According to an embodiment of the invention, following coating, the coated particulate fertilizer product may be conventionally treated with a finely divided powdery mineral such as talc.

For the provision of desired properties such as scent and/or colour, additives may be mixed with the product. Substances endowing scent include perfumes, e.g. substances used for this purpose in food or cosmetic products. Agents endowing the product with colour include pigments such as pigments used in ordinary paints, or dyes e.g. caramel dyes. To improve properties, also amines, preferably fatty amines may be mixed with the product. Said additives may be incorporated in the particles and/or coating, preferably in the coating. Substances used in moisturizing creams like glycerol or urea may be added to the coating.

The skin of the hands is not dehydrated by manual application of the coated fertilizer particles of the invention, but on the contrary, a pleasant skin feel is attained. Dermatological testing of the coated particulate fertilizer product of the invention in relevant research facilities gave results confirming that skin is not irritated or allergized by the product. Moreover, the product was subjected to tests for dust generation and caking tendency using physical measurements. In the dust generation test, a defined weighed amount of the product was fluidized using an air current for 2 minutes. Dust accumulated on filter paper was weighed, the result being expressed in mg of dust/kg of sample. In the test for the tendency to cake, samples of about 90 ml were placed in small plastic bags that were closed, and subjected to pressure (1 kg/cm²) for 24 hours. The pressure was released and the bags were dropped once on each side from the altitude of 48 cm. The bags were opened on a 7.1 mm screen, the caked portion of the sample remaining on the screen while the rest was passed therethrough. Caking is expressed in % by weight. In addition to having a favourable conditioning effect on hands, the results of the tests show that the product of the invention has superior physical properties.

### Example 1

Preparation of the coating. 1145 kg of an oily liquid at 70 °C temperature, White Coat (Fortum Oyj), having a viscosity of 4.1 mm²/s (at 100 °C) and a solidification point of +35 °C, was pumped into a mixing tank provided with heating resistors. Mixing was started, and 90 kg of an organophilic sepiolite (Pangel B20, Grupo Tolsa) was added to the oily liquid. The coating was ready for use after mixing further at 70 °C for 20 minutes.

### Example 2

Coating of the fertilizer granules. The coating produced according to Example 1, heated to 75 °C, was sprayed as a thin mist by pumping with a membrane pump through a nozzle using air for nebulization on fertilizer granules in a coating drum. The mixed fertilizer of the NK-type was produced by compacting, having nutrient ratio of 10-0-19 (N-P-K), and a particle size between 0.5 and 1.5 mm. The temperature of the fertilizer during coating was 4 °C. In the coating process, coating material was sprayed in continuous manner in an amount of 10 kg per ton of fertilizer.

### Example 3

Properties of the product. Coated fertilizer granules were handled manually with bare hands, and no dehydration but rather a pleasant feel of hands was detected. In addition, dust generation from the granules was measured, thus obtaining results shown in Table 1 at day 2 and at day 40 after coating. Both uncoated fertilizer granules and granules coated with an industrially used coating material based on oil (control coating) were used as controls. Control coating was used in identical amounts as the coating of Example 1, that is 10 kg/ton.

**Table 1**

| Dust contents of fertilizer granules | | |
|---|---|---|
| Product | Storage time 2 days | Storage time 40 days |
| Uncoated granules | 8000 mg/kg | 10000 mg/kg |
| Granules coated with control coating | 2000 mg/kg | 3400 mg/kg |
| Granules of Example 2 | 1500 mg/kg | 1500 mg/kg |

### Example 4

Coating of the fertilizer granules. Coating of the fertilizer granules was carried out using the method of Example 2, but using a mixed NPK fertilizer having a nutrient ratio of 8-4-14 (N-P-K) and a particle size from 1 to 3 mm, produced by compacting, as the fertilizer to be coated. Coating material was used 10 kg/ton of fertilizer. During coating, the temperature of the fertilizer was 2 °C.

### Example 5

Dermatological testing. The product produced by the method of Example 4 was subjected to dermatological testing in a specialized research institute with the purpose of determining the tendency of the product to induce allergies or irritations of skin. The product was applied on a test patch (Leukotest (R), Fa. Hartmann), followed by fixing the patch on the skin of the arm for 24 hours. The patch was removed, followed by examination of the site by a dermatologist immediately after removal, and 48 and 72 hours after initiation of the test. The results from this dermatological test were interpreted according to guidelines of ICDRG (International Contact Detmatitis Research Group). In the test, none of the 30 test persons showed signs of skin irritation.

### Example 6

### Preparation of the coating

92.5 g of the oily liquid of Example 1 was weighed and introduced to a beaker at 60 °C. Said oily liquid was mixed with a magnetic mixer, and then heated to 85 °C and added with 7,5 g of organophilic sepiolite. Mixing was continued for 5 minutes resulting in a coating material ready for use.

### Example 7

Coating of fertilizer granules. 10 kg of mixed NPK fertilizer produced with compacting, with nutrient ratio of 8-4-14 (N-P-K), was weighed and introduced to a concrete mixer. The mixer was started, followed by spraying of 70 g of the coating of Example 6 on the fertilizer granules through a nozzle using air for nebulization. The spraying nozzle was heated to 80 °C in a hot cabin and was removed therefrom just prior to spraying. The air used for nebilization was heated to about 80 °C. During coating, the temperature of the fertilizer granules was 18 °C.

### Example 8

Properties of the product. Coated fertilizer granules produced with the method of Example 7 were manually handled with bare hands, resulting in a pleasant feel of the hands instead of dehydration. Results shown in Table 2 were obtained from measurements of dust formation and caking for the coated fertilizer granules produced with the method of Example 7. Both uncoated fertilizer granules and granules coated with an industrially used coating material based on oil (control coating) were used as controls. Control coating was used in identical amounts as the coating of Example 6, that is 70 g/kg.

**Table 2**

| Physical properties of fertilizer granules | | |
|---|---|---|
| Product | Dust | Caking |
| Uncoated granules | 6100 mg/kg | 2 % |
| Granules coated with control coating | 1900 mg/kg | 0 % |
| Granules of Example 7 | 1500 mg/kg | 0 % |

## Claims

1. A product of coated fertilizer particles, **characterized in that** the coating comprises a gel formed from an oily liquid and a gelling agent selected from organophilic clay producing a gel with said oil, wherein the proportion of the coating ranges between 0.05 and 5 % weight of the product and the coating comprises between 70 and 99.5 % by weight of the oily liquid and between 30 and 0.5 % by weight of the gelling agent.

2. The product of claim 1, **characterized in that** the proportion of the coating ranges between 0.5 and 1.5 % by weight of the product.

3. The product of claim 1 or 2, **characterized in that** the coating comprises between 87 and 97 % by weight of the oily liquid, and between 13 and 3 % by weight of the gelling agent.

4. The product according to any of the preceding claims, **characterized in that** said oily liquid contains from 50 to 100 %, preferably from 70 to 100 % by weight of oil.

5. The product according to any of the preceding claims, **characterized in that** said oil is a synthetic hydrocarbon, a hydrocarbon based on mineral oil, fossil oil, a derivative or a mixture thereof.

6. The product of claim 5, **characterized in that** said hydrocarbon is a linear, branched or cyclic alkane or a mixture thereof, having a viscosity (ASTM D 445) preferably ranging between 2.7 and 15 mm²/s, as measured at 100 °C, and/or having a solidification point (ASTM D 97) preferably ranging between 25 and 40 °C.

7. The product of claim 5, **characterized in that** said fossil oil is a triglyceride, another modified fatty acid ester, natural wax or a mixture thereof having a viscosity (ASTM D 445) preferably ranging between 6 and 9 mm²/s as measured at 100 °C, and/or a solidification point (ASTM D 97) preferably ranging between 25 and 40 °C.

8. The product according to any of the preceding claims, **characterized in that** said clay is sepiolite, bentonite, attapulgite, hectorite, palygorscite, or mixtures thereof.

9. The product according to any of the preceding claims, **characterized in that** said gelling agent is an organophilic sepiolite.

10. The product according to any of the preceding claims, **characterized in that** said fertilizer particles consist of a dust generating, hygroscopic and/or caking substance.

11. The product according to any of the preceding claims, **characterized in that** said fertilizer particles have sizes ranging between 0.3 and 6 mm, preferably between 0.5 and 5 mm, most preferably between 0.5 and 4 mm.

12. The product according to any of the preceding claims, **characterized in that** said fertilizer particles are produced by compaction.

13. A method for producing a product of coated fertilizer particles according to the claim 1, **characterized in that** an oily liquid and a gelling agent selected from organophilic clay, clay that may be organophilized and a surface active agent, or mixtures thereof producing a gel with said oil, are fed as a mixture on particles, thus forming a gel, wherein the proportion of the coating ranges between 0.05 and 5 % weight of the product and the coating comprises between 70 and 99.5 % by weight of the oily liquid and between 30 and 0.5 % by weight of the gelling agent.

14. The method of claim 13, **characterized in that** the mixture of the oily liquid and the gelling agent is prepared at 50 to 100 °C.

15. The method of claim 13 or 14, **characterized in that** the mixture of the oily liquid and the gelling agent is fed on the particles at 55 to 95 °C.

16. The method according to any of the claims 13 - 15, **characterized in that** the mixture of the oily liquid and the gelling agent is fed on the particles having a temperature between -20 and +60 °C, preferably between 0 and 40 °C, thus obtaining a gel by cooling the mixture.

17. The method according to any of the claims 13 - 16, **characterized in that** the proportion of the coating ranges between 0.5 and 1.5 % by weight of the product.

18. The method according to any of the claims 13 - 17, **characterized in that** the coating comprises between 87 and 97 % by weight of the oily liquid, and between 13 and 3 % by weight of the gelling agent.

19. The method according to any of the claims 13 - 18, **characterized in that** the oily liquid contains between 50 and 100 %, preferably between 70 and 100 % by weight of said oil.

20. The method according to any of the claims 13 - 19, **characterized in that** said oil is a synthetic hydrocarbon, a hydrocarbon based on mineral oil, fossil oil, a derivative or a mixture thereof.

21. The method of claim 20, **characterized in that** said hydrocarbon is a linear, branched or cyclic alkane or a mixture thereof, having a viscosity (ASTM D 445) preferably ranging between 2.7 and 15 mm²/s, as measured at 100 °C, and/or having a solidification point (ASTM D 97) preferably ranging between 25 and 40 °C.

22. The method of claim 20, **characterized in that** said fossil oil is a triglyceride, another modified fatty acid ester, natural wax or a mixture thereof having a viscosity (ASTM D 445) preferably ranging between 6 and 9 mm²/s as measured at 100 °C and/or a solidification point (ASTM D 97) preferably ranging between 25 and 40 °C.

23. The method according to claims 13 - 22, **characterized in that** said clay is sepiolite, bentonite, attapulgite, hectorite, palygorscite, or mixtures thereof.

24. The method according to any of the claims 13 - 22, **characterized in that** said gelling agent is an organophilic sepiolite.

25. The method according to any of the claims 13 - 24, **characterized in that** said fertilizer particles consist of a dust generating, hygroscopic and/or caking substance.

26. The method according to any of the claims 13 - 25, **characterized in that** said fertilizer particles have sizes ranging between 0.3 and 6 mm, preferably between 0.5 and 5 mm, most preferably between 0.5 and 4 mm.

27. The method according to any of the claims 13 - 26, **characterized in that** said fertilizer particles are produced by compaction.

28. Use of the product according to any of the claims 1 - 12, or produced by a method according to any of the claims 13 - 27 for preventing dehydration of hands due to handling of said fertilizer particles.

## Patentansprüche

1. Produkt aus beschichteten Düngemittelteilchen, **dadurch gekennzeichnet**, das die Beschichtung ein Gel umfasst, das aus einer öligen Flüssigkeit und einem Geliermittel gebildet ist und ausgewählt ist aus organophilem Ton, der ein Gel mit dem Öl erzeugt, wobei der Anteil der Beschichtung im Bereich zwischen 0,05 und 5 Gew.-% des Produkts liegt und die Beschichtung zwischen 70 und 99,5 Gew.-% der öligen Flüssigkeit und zwischen 30 und 0,5 Gew.-% des Geliermittels umfasst.

2. Produkt nach Anspruch 1, **dadurch gekennzeichnet, dass** der Anteil der Beschichtung im Bereich zwischen 0,5 und 1,5 Gew.-% des Produkts liegt.

3. Produkt nach Anspruch 1 oder 2, **dadurch gekennzeichnet, dass** die Beschichtung zwischen 87 und 97 Gew.-% der öligen Flüssigkeit und zwischen 13 und 3 Gew.-% des Geliermittels umfasst.

4. Produkt nach einem der vorherigen Ansprüche, **dadurch gekennzeichnet, dass** die ölige Flüssigkeit von 50 bis 100 Gew.-%, vorzugsweise von 70 bis 100 Gew.-% Öl enthält.

5. Produkt nach einem der vorherigen Ansprüche, **dadurch gekennzeichnet, dass** das Öl ein synthetischer Kohlenwasserstoff, ein Kohlenwasserstoff auf Mineralölbasis, ein fossiles Öl, ein Derivat oder eine Mischung davon ist.

6. Produkt nach Anspruch 5, **dadurch gekennzeichnet, dass** der Kohlenwasserstoff lineares, verzweigtes oder cyclisches Alkan oder eine Mischung davon ist und eine bei 100 °C gemessene Viskosität (ASTM D 445) vorzugsweise im Bereich zwischen 2,7 und 15 mm2/s aufweist und/oder einen Erstarrungspunkt (ASTM D 97) vorzugsweise im Bereich zwischen 25 und 40 °C aufweist.

7. Produkt nach Anspruch 5, **dadurch gekennzeichnet, dass** das fossile Öl ein Triglycerid, ein anderer modifizierter Fettsäureester, ein natürliches Wachs oder eine Mischung davon ist und eine bei 100 °C gemessene Viskosität (ASTM D 445) vorzugsweise im Bereich zwischen 6 und 9 mm2/s aufweist und/oder einen Erstarrungspunkt (ASTM D 97) vorzugsweise im Bereich zwischen 25 und 40 °C aufweist.

8. Produkt nach einem der vorherigen Ansprüche, **dadurch gekennzeichnet, dass** der Ton Sepiolit, Bentonit, Attapulgit, Hectorit, Palygorscit oder Mischungen davon ist.

9. Produkt nach einem der vorherigen Ansprüche, **dadurch gekennzeichnet, dass** das Geliermittel ein organophiler Sepiolit ist.

10. Produkt nach einem der vorherigen Ansprüche, **dadurch gekennzeichnet, dass** die Düngemittelteilchen aus einer stauberzeugenden, hygroskopischen und/oder zusammenklebenden Substanz bestehen.

11. Produkt nach einem der vorherigen Ansprüche, **dadurch gekennzeichnet, dass** die Düngemittelteilchen Größen im Bereich zwischen 0,3 und 6 mm, vorzugsweise zwischen 0,5 und 5 mm, am meisten bevorzugt zwischen 0,5 und 4 mm aufweisen.

12. Produkt nach einem der vorherigen Ansprüche, **dadurch gekennzeichnet, dass** die Düngemittelteilchen durch Verdichtung hergestellt werden.

13. Verfahren zum Herstellen eines Produkts aus beschichteten Düngemittelteilchen nach Anspruch 1, **dadurch gekennzeichnet, dass** eine ölige Flüssigkeit und ein Geliermittel, die ausgewählt sind aus organophilem Ton, Ton, der organophilisiert werden kann, und einem oberflächenaktiven Mittel oder Mischungen davon, die ein Gel mit dem Öl erzeugen, als eine Mischung den Teilchen zugeführt werden und auf diese Weise ein Gel bilden, wobei der Anteil der Beschichtung im Bereich zwischen 0,05 und 5 Gew.-% des Produkts liegt und die Beschichtung zwischen 70 und 99,5 Gew.-% der öligen Flüssigkeit und zwischen 30 und 0,5 Gew.-% des Geliermittels umfasst.

14. Verfahren nach Anspruch 13, **dadurch gekennzeichnet, dass** die Mischung aus der öligen Flüssigkeit und dem Geliermittel bei 50 bis 100 °C hergestellt wird.

15. Verfahren nach Anspruch 13 oder 14, **dadurch gekennzeichnet, dass** die Mischung aus der öligen Flüssigkeit und dem Geliermittel den Teilchen bei 55 bis 95 °C zugeführt wird.

16. Verfahren nach einem der Ansprüche 13 bis 15, **dadurch gekennzeichnet, dass** die Mischung aus der öligen Flüssigkeit und dem Geliermittel den Teilchen zugeführt wird, wenn diese eine Temperatur zwischen -20 und +60 °C, vorzugsweise zwischen 0 und 40 °C aufweisen, sodass durch Kühlen der Mischung ein Gel erhalten wird.

17. Verfahren nach einem der Ansprüche 13 bis 16, **dadurch gekennzeichnet, dass** der Anteil der Beschichtung im Bereich zwischen 0,5 und 1,5 Gew.-% des Produkts liegt.

18. Verfahren nach einem der Ansprüche 13 bis 17, **dadurch gekennzeichnet, dass** die Beschichtung zwischen 87 und 97 Gew.-% der öligen Flüssigkeit und zwischen 13 und 3 Gew.-% des Geliermittels umfasst.

19. Verfahren nach einem der Ansprüche 13 bis 18, **dadurch gekennzeichnet, dass** die ölige Flüssigkeit zwischen 50 und 100 Gew.-%, vorzugsweise zwischen 70 und 100 Gew.-% des genannten Öls enthält.

20. Verfahren nach einem der Ansprüche 13 bis 19, **dadurch gekennzeichnet, dass** das Öl ein synthetischer Kohlenwasserstoff, ein Kohlenwasserstoff auf Mineralölbasis, ein fossiles Öl, ein Derivat oder eine Mischung davon ist.

21. Verfahren nach Anspruch 20, **dadurch gekennzeichnet, dass** der Kohlenwasserstoff ein lineares, verzweigtes oder cyclisches Alkan oder eine Mischung davon ist und eine bei 100 °C gemessene Viskosität (ASTM D 445) vorzugsweise im Bereich zwischen 2,7 und 15 mm2/s aufweist und/oder einen Erstarrungspunkt (ASTM D 97) vorzugsweise im Bereich zwischen 25 und 40 °C aufweist.

22. Verfahren nach Anspruch 20, **dadurch gekennzeichnet, dass** das fossile Öl ein Triglycerid, ein anderer modifizierter Fettsäureester, ein natürliches Wachs oder eine Mischung davon ist und eine bei 100 °C gemessene Viskosität (ASTM D 445) vorzugsweise im Bereich zwischen 6 und 9 mm2/s aufweist und/oder einen Erstarrungspunkt (ASTM D 97) vorzugsweise im Bereich zwischen 25 und 40 °C aufweist.

23. Verfahren nach einem der Ansprüche 13 bis 22, **dadurch gekennzeichnet, dass** der Lehm Sepiolit, Bentonit, Attapulgit, Hectorit, Palygorscit oder Mischungen davon ist.

24. Verfahren nach einem der Ansprüche 13 bis 22, **dadurch gekennzeichnet, dass** das Geliermittel ein organophiler Sepiolit ist.

25. Verfahren nach einem der Ansprüche 13 bis 24, **dadurch gekennzeichnet, dass** die Düngemittelteilchen aus einer stauberzeugenden, hygroskopischen und/oder zusammenbackenden Substanz bestehen.

26. Verfahren nach einem der Ansprüche 13 bis 25, **dadurch gekennzeichnet, dass** die Düngemittelteilchen Größen im Bereich zwischen 0,3 und 6 mm, vorzugsweise zwischen 0,5 und 5 mm, am meisten bevorzugt zwischen 0,5 und 4 mm aufweisen.

27. Verfahren nach einem der Ansprüche 13 bis 26, **dadurch gekennzeichnet, dass** die Düngemittelteilchen durch Verdichtung hergestellt werden.

28. Verwendung des Produkts nach einem der Ansprüche 1 bis 12, oder des Produkts, das durch ein Verfahren nach einem der Ansprüche 13 bis 27 hergestellt wird, um die Austrocknung der Hände aufgrund des Umgangs mit den Düngemittelteilchen zu verhindern.

## Revendications

1. Produit de particules de fertilisant revêtues, **caractérisé en ce que** le revêtement comprend un gel formé à partir d'un liquide huileux et d'un agent gélifiant choisi parmi une argile organophile produisant un gel avec ladite huile, où la proportion du revêtement est comprise entre 0,05 et 5% en poids du produit et le revêtement comprend entre 70 et 99,5% en poids du liquide huileux et entre 30 et 0,5% en poids de l'agent gélifiant.

2. Produit selon la revendication 1, **caractérisé en ce que** la proportion du revêtement est comprise entre 0,5 et 1,5% en poids du produit.

3. Produit selon la revendication 1 ou 2, **caractérisé en ce que** le revêtement comprend entre 87 et 97% en poids du liquide huileux, et entre 13 et 3% en poids de l'agent gélifiant.

4. Produit selon l'une quelconque des revendications précédentes, **caractérisé en ce que** ledit liquide huileux contient de 50 à 100%, préférablement de 70 à 100% en poids d'huile.

5. Produit selon l'une quelconque des revendications précédentes, **caractérisé en ce que** ladite huile est un hydrocarbure synthétique, un hydrocarbure à base d'huile minérale, d'huile fossile, un dérivé ou un mélange de ceux-ci.

6. Produit selon la revendication 5, **caractérisé en ce que** ledit hydrocarbure est un alcane linéaire, ramifié ou cyclique, ou un mélange de ceux-ci, ayant une viscosité (ASTM D445) comprise de préférence entre 2,7 7 et 15 mm²/s, tel que mesuré à 100°C, et/ou ayant un point de solidification (ASTM D97) compris de préférence entre 25 et 40°C.

7. Produit selon la revendication 5, **caractérisé en ce que** ladite huile fossile est un triglycéride, un autre ester d'acide gras modifié, une cire naturelle ou un mélange de ceux-ci, ayant une viscosité (ASTM D445) comprise de préférence entre 6 et 9 mm²/s, tel que mesuré à 100°C, et/ou un point de solidification (ASTM D97) compris de préférence entre 25 et 40°C.

8. Produit selon l'une quelconque des revendications précédentes, **caractérisé en ce que** ladite argile est la sépiolite, la bentonite, l'attapulgite, l'hectorite, la palygorskite, ou des mélanges de celles-ci.

9. Produit selon l'une quelconque des revendications précédentes, **caractérisé en ce que** ledit agent gélifiant est une sépiolite organophile.

10. Produit selon l'une quelconque des revendications précédentes, **caractérisé en ce que** lesdites particules de fertilisant sont constituées d'une substance génératrice de poussière, hygroscopique et/ou agglomérante.

11. Produit selon l'une quelconque des revendications précédentes, **caractérisé en ce que** lesdites particules de fertilisant possèdent des tailles comprises entre 0,3 et 6 mm, préférablement entre 0,5 et 5 mm, tout préférablement entre 0,5 et 4 mm.

12. Produit selon l'une quelconque des revendications précédentes, **caractérisé en ce que** lesdites particules de fertilisant sont produites par compaction.

13. Méthode de production d'un produit de particules de fertilisant revêtues selon la revendication 1, **caractérisée en ce qu'**un liquide huileux et un agent gélifiant choisi parmi une argile organophile, une argile pouvant être rendue organophile, et un agent tensioactif, ou des mélanges de ceux-ci, produisant un gel avec ladite huile, sont alimentés sous forme de mélange sur des particules, formant ainsi un gel, où la proportion du revêtement est comprise entre 0,05 et 5% en poids du produit et le revêtement comprend entre 70 et 99,5% en poids du liquide huileux et entre 30 et 0,5% en poids de l'agent gélifiant.

14. Méthode selon la revendication 13, **caractérisée en ce que** le mélange du liquide huileux et de l'agent gélifiant est préparé à de 50 à 100°C.

15. Méthode selon la revendication 13 ou 14, **caractérisée en ce que** le mélange du liquide huileux et de l'agent gélifiant est alimenté sur les particules à de 55 à 95°C.

16. Méthode selon l'une quelconque des revendications 13-15, **caractérisée en ce que** le mélange du liquide huileux et de l'agent gélifiant est alimenté sur les particules ayant une température comprise entre -20 et +60°C, préférablement entre 0 et 40°C, conduisant ainsi à un gel par refroidissement du mélange.

17. Méthode selon l'une quelconque des revendications 13-16, **caractérisée en ce que** la proportion du revêtement est comprise entre 0,5 et 1,5% en poids du produit.

18. Méthode selon l'une quelconque des revendications 13-17, **caractérisée en ce que** le revêtement comprend entre 87 et 97% en poids du liquide huileux, et entre 13 et 3% en poids de l'agent gélifiant.

19. Méthode selon l'une quelconque des revendications 13-18, **caractérisée en ce que** le liquide huileux contient entre 50 et 100%, préférablement entre 70 et 100% en poids de ladite huile.

20. Méthode selon l'une quelconque des revendications 13-19, **caractérisée en ce que** ladite huile est un hydrocarbure synthétique, un hydrocarbure à base d'huile minérale, d'huile fossile, un dérivé ou un mélange de ceux-ci.

21. Méthode selon la revendication 20, **caractérisée en ce que** ledit hydrocarbure est un alcane linéaire, ramifié ou cyclique, ou un mélange de ceux-ci, ayant une viscosité (ASTM D445) comprise de préférence entre 2,7 et 15 mm²/s, tel que mesuré à 100°C, et/ou ayant un point de solidification (ASTM D97) compris de préférence entre 25 et 40°C.

22. Méthode selon la revendication 20, **caractérisée en ce que** ladite huile fossile est un triglycéride, un autre ester d'acide gras modifié, une cire naturelle ou un mélange de ceux-ci, ayant une viscosité (ASTM D445) comprise de préférence entre 6 et 9 mm²/s, tel que mesuré à 100°C, et/ou un point de solidification (ASTM D97) compris de préférence entre 25 et 40°C.

23. Méthode selon les revendications 13-22, **caractérisée en ce que** ladite argile est la sépiolite, la bentonite, l'attapulgite, l'hectorite, la palygorskite, ou des mélanges de celles-ci.

24. Méthode selon l'une quelconque des revendications 13-22, **caractérisée en ce que** ledit agent gélifiant est une sépiolite organophile.

25. Méthode selon l'une quelconque des revendications 13-24, **caractérisée en ce que** lesdites particules de fertilisant sont constituées d'une substance génératrice de poussière, hygroscopique et/ou agglomérante.

26. Méthode selon l'une quelconque des revendications 13-25, **caractérisée en ce que** lesdites particules de fertilisant possèdent des tailles comprises entre 0,3 et 6 mm, préférablement entre 0,5 et 5 mm, tout préférablement entre 0,5 et 4 mm.

27. Méthode selon l'une quelconque des revendications 13-26, **caractérisée en ce que** lesdites particules de fertilisant sont produites par compaction.

28. Utilisation du produit selon l'une quelconque des revendications 1-12, ou produit par une méthode selon l'une quelconque des revendications 13-27, pour empêcher une déshydratation des mains due à la manipulation desdites particules de fertilisant.
